# EUROPEAN PATENT SPECIFICATION

(11) **EP 4 368 403 B1**
(45) Date of publication and mention of the grant of the patent: **31.12.2025**
(21) Application number: 23207763.6
(22) Date of filing: 03.11.2023
(51) Int. Cl.: B41J 3/407, B64F 5/40, B05D 5/00, B05D 1/26, B05D 7/00

(54) **APPARATUS AND METHOD FOR LIVERY REPAIR**
VORRICHTUNG UND VERFAHREN ZUR LEBERREPARATUR
APPAREIL ET PROCÉDÉ DE RÉPARATION HÉPATIQUE

(30) Priority: 08.11.2022 US 202217983166
(43) Date of publication of application: 15.05.2024
(73) Proprietor: The Boeing Company, Arlington, VA 22202 (US)
(72) Inventor: LARSON-SMITH, Kjersta, CHICAGO, 60606-1596 (US); ARTHUR, Shane, CHICAGO, 60606-1596 (US); GREENE, Edward, CHICAGO, 60606-1596 (US); MELLIN, Matthew, CHICAGO, 60606-1596 (US); CORONA, Alexandra, CHICAGO, 60606-1596 (US); RILEY, Terrell, CHICAGO, 60606-1596 (US)
(74) Representative: Plasseraud IP

(56) References cited:
- EP-A1- 2 641 661
- FR-A1- 3 058 916
- US-A1- 2012 138 207
- US-A1- 2018 056 670

## Description

### FIELD

This disclosure relates generally to repairing complex aircraft parts, and more particularly to using a variety of processes to repair in-production images, as well as post-production images.

### BACKGROUND

Proper adherence of materials applied to surfaces of aircraft can be difficult. Adhering materials to aircraft surfaces becomes more complicated when the materials are associated with the repair of an altered image on the surface of the aircraft. US2018/056670 A1, according to its abstract states a surface treatment repair assembly for applying a surface treatment to a contoured surface includes an attachment device configured to removably attach to the contoured surface and a robotic unit is coupled to the attachment device. Furthermore, a treating unit is operably mounted on the robotic unit and including a plurality of applicator heads forming a treatment array and each applicator head is configured to apply a surface repair treatment. At least one sensor is mounted on the treating unit and configured to identify a target area for the surface repair treatment and a controller is operably coupled to the robotic unit and the treating unit. The controller is programmed to control a movement of the robotic unit to position the treatment array adjacent to the target area and to selectively operate the treatment array to apply the surface repair treatment on the target area of the contoured surface. EP2641661 A1, according to its abstract states a graphical application system, with a surface spattering device, that comprises at least one nozzle means for an expelling of a spattering material onto a target surface, a nozzle control mechanism to control characteristics of the expelling of the nozzle means, a spattering material supply, a spatial referencing unit to reference the spattering device in space for determining its position and orientation and a computation means to automatically control the expelling by the nozzle control mechanism according to information gained by the spatial referencing unit and according to predefined desired spattering data, wherein the spatial referencing unit is located remote from the spattering device and comprises at least two optical 2D cameras arranged with a stereobasis inbetween the cameras, for determining the position and orientation by digital image processing of images taken by the cameras. US2012/138207 A1 according to its abstract states a method and apparatus for smoothing a surface of a component, e.g., of large structures, as for example ship hulls for subsequent painting, is disclosed. An exemplary method may include measuring an unevennesses of the surface of the component, levelling the unevennesses by material removal and/or by material application of a levelling mass, adding reference markings at certain locations on the surface to be measured before the measurement of the surface, and taking account of the reference markings during the measurement of the unevennesses of the surface. FR3058916 A1 according to its abstract states a method for treating a surface of a part comprising a rough zone having reliefs and hollows. This method comprises: - a data taking into account step, during which a set of spatial data representative of the surface configuration of said rough area, are taken into account, and processed, in a management and control unit, - a deposition step, during which a substance is deposited on said rough area by deposition means to form a layer of substance so as to cover the reliefs and/or fill the hollows, a support device, on which the part is mounted, and the deposition means being moved relatively by the management and control unit according to the spatial data.

### SUMMARY

The subject matter of the present application has been developed in response to the present state of the art, and in particular, in response to the shortcomings of identifying and repairing images on aircraft surfaces, that have not yet been fully solved by currently available techniques. Accordingly, the subject matter of the present application has been developed to provide methods and systems that overcome at least some of the above-discussed shortcomings of prior art techniques.

The following is a non-exhaustive list of examples, which may or may not be claimed, of the subject matter, disclosed herein.

In one example, a method according to claim 1 is provided.

In another example, a system according to claim 9 is provided.

In still another example, an apparatus includes an imaging device and a processor. The imaging device generates an image scan of an altered surface image on a surface of an aircraft part. The processor analyzes the image scan to determine characteristics of the altered surface image and selects a repair process from a plurality of repair processes based on the characteristics of the altered surface image. The plurality of repair processes includes a paint repair process, a decal repair process, and an inkjet repair process.

The described features, structures, advantages, and/or characteristics of the subject matter of the present disclosure may be combined in any suitable manner in one or more examples and/or implementations. In the following description, numerous specific details are provided to impart a thorough understanding of examples of the subject matter of the present disclosure. One skilled in the relevant art will recognize that the subject matter of the present disclosure may be practiced without one or more of the specific features, details, components, materials, and/or methods of a particular example or implementation. In other instances, additional features and advantages may be recognized in certain examples and/or implementations that may not be present in all examples or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims or may be learned by the practice of the subject matter as set forth hereinafter.

### BRIEF DESCRIPTION OF THE DRAWINGS

In order that the advantages of the subject matter may be more readily understood, a more particular description of the subject matter briefly described above will be rendered by reference to specific examples that are illustrated in the appended drawings. Understanding that these drawings depict only typical examples of the subject matter, they are not therefore to be considered to be limiting of its scope. The subject matter will be described and explained with additional specificity and detail through the use of the drawings, in which:
Figures 1A and 1B collectively illustrate a schematic flow diagram of a method for performing surface image repairs, according to one or more examples of the present disclosure;
Figure 2 is a block diagram of components that perform the method of Figures 1A and 1B, according to one or more examples of the present disclosure; and
Figure 3 is a perspective view of paint/image removal, surface preparation, printing, and finishing environments, according to one or more examples of the present disclosure.

### DETAILED DESCRIPTION

Reference throughout this specification to "one example," "an example," or similar language means that a particular feature, structure, or characteristic described in connection with the example is included in at least one example of the present disclosure. Appearances of the phrases "in one example," "in an example," and similar language throughout this specification may, but do not necessarily, all refer to the same example. Similarly, the use of the term "implementation" means an implementation having a particular feature, structure, or characteristic described in connection with one or more examples of the present disclosure, however, absent an express correlation to indicate otherwise, an implementation may be associated with one or more examples.

Reference is made to herein to the term "printed" or "inkjet printed" or "inkjet printed" or "ink jet printed" to mean a method of forming a printed surface using ink as the print medium. The ink may be solid or liquid or the like ink. The term "painted" or "painting" refers to the process of using paint in the application method. The term "decal" refers to a separately printed flexible material that is adherable to the surface. Interior and exterior decals are used on aircraft for non-painted technical markings, logos, flags and liveries. Decals are adhesive films with digitally-printed designs (i.e., applique, large area graphic decals, aeronautic film, etc.). Aircraft manufacturers use decals and aftermarket vendors use them for decorative livery and are typically used for photorealistic images and other design elements (e.g. fades) that are difficult/costly to achieve with paint. Decals offer airline customers cost effective brand differentiation and allows the use of complex liveries without addition to cost and flow, improves rate, reduces usage of hazardous materials and may reduce weight.

The following detailed description is intended to provide both apparatuses, systems, and methods for carrying out the disclosure. Actual scope of the disclosure is defined by the appended claims.

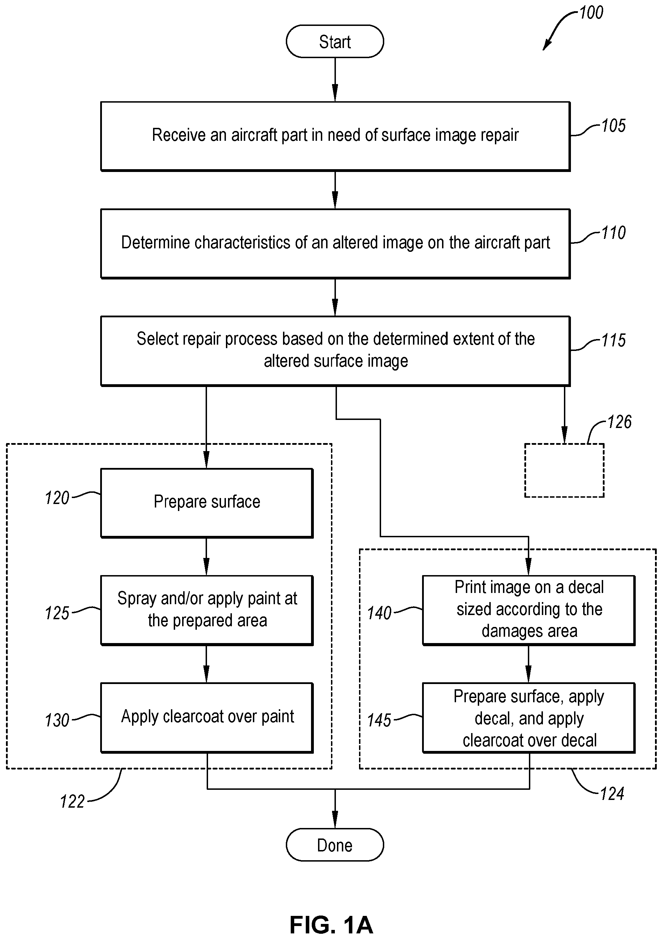

Referring to Figure 1A, according to one example, a method 100 of repairing livery on an aircraft part is shown. As used herein, livery is any of various simple or comprehensive images applied (e.g., printed, painted, adhered) onto an exterior surface of a part. In certain examples, the livery of an aircraft includes a set of insignia comprising color, graphic, and typographical identifiers, which operators apply to their aircraft to identify the operators of the aircraft.

The method 100 includes (block 105) receiving an aircraft part in need of surface image/livery repair. As defined herein, an image/livery on the surface of an aircraft in need of repair is termed an altered surface image because the image has been altered relative to or is different from an intended surface image or the image as originally applied. Additionally, the method 100 includes (block 110) automatically determining characteristics of an altered surface image on a surface of the aircraft part. The characteristics of the altered surface image may include paint and/or ink defects (e.g., bleeding, low or high saturation, banding errors, surface contamination (e.g., debris, grease, fluid, or other contaminants), overspray, stretching, shrinkage, edge defects, washout, color outage, etc.), particulate contamination (e.g., dust, lint, insects, etc.), craters (e.g., fish eyes), runs, drips, avalanching, improper paint adhesion, ghosting, hazing, dulling, blushing, micro-holing, tape or masking caused deformities, micro-blistering, orange peeling, or comparable surface defects. The characteristics of the image may also include the sizing and positioning of the altered surface image.

Additionally, the method 100 includes (block 115) automatically, using a paint defect detection system, selecting a repair process based on the
the determined characteristics of the altered surface image and/or how the original livery was applied. If the repair process selected at block 115 is a paint repair process 122, the method 100 includes (block 120) preparing the surface area of the altered surface image based on the determined characteristics of the altered surface image. Surface preparation may include applying compressed air, applying cleaning solvents or thinners, wiping with a moist wiper, applying a tack rag, sanding, abrading, or any comparable surface preparation techniques. After the surface is prepared at block 120, the paint repair process 122 of the method 100 includes (block 125) spraying and/or applying colored paint to visually blend in with an image area of the surface associated with the altered surface image, based on the determined characteristics of the altered surface image and (block 130) applying a finishing coat over the applied paint.

If the repair process selected at block 115 is a decal repair process 124, the method 100 includes (block 140) printing an image on a decal that is sized based on the determined characteristics of the altered surface image. After the image is printed on the decal, the decal repair process 124 of the method 100 includes (block 145) preparing the area associated with the altered surface image, applying the decal, and applying a finishing coat over the decal.

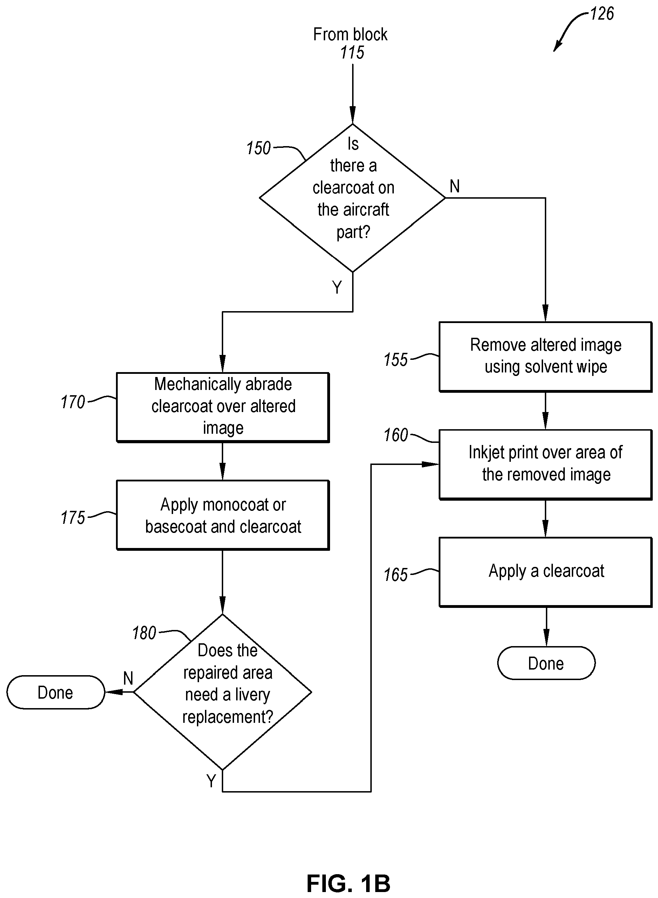

Referring to Figures 1A and 1B, if the repair process selected at block 115 is an inkjet repair process 126, the method 100 includes (block 150) determining if there is a clearcoat on the aircraft part where the altered surface image is located based on the determined characteristics of the altered surface image. An aircraft part with a clearcoat is indicative of an aircraft part that exists on a fleet aircraft or is a new aircraft part that experienced image damage/alteration after application of a clearcoat.

If no clearcoat is present, as determined at block 150, the inkjet repair process 126 of the method 100 includes (block 155) removing the altered surface image using a solvent wipe(s), (block 160) inkjet printing a livery over the area of the removed image, and (block 165) applying a clearcoat based on the determined characteristics of the altered surface image, then the method 100 ends. This would typically be the case where the image was altered after an inkjet printing application on a new aircraft part before a clearcoat application.

If a clearcoat is present, as determined at block 150, the inkjet repair process 126 of the method 100 includes (block 170) mechanically abrading the clearcoat, (block 175) applying a white basecoat, proceeds to block 160 and block 165 of the inkjet repair process 126 of the method 100, if it is determined (block 180) that the area under repair is in need of a livery replacement, then the method 100 ends.

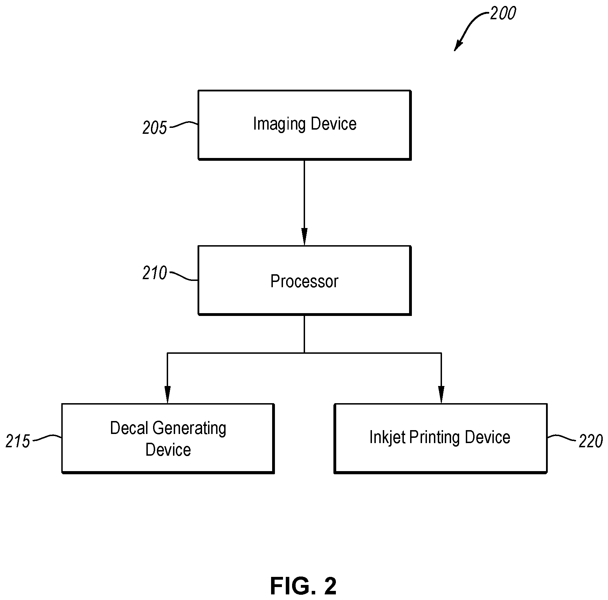

Referring to Figure 2, according to certain examples, a system 200 performs at least some of the steps of the method 100. The system 200 includes an imaging device 205, a processor 210, a decal generating device 215, and an inkjet printing device 220. The imaging device 205 generates an image scan of an altered surface image on a surface of an aircraft part. The imaging device 205 may be any camera device capable of recording an analog or a digital image of an aircraft part. Additionally, or alternatively, the imaging device 205 may be able to sense depth values of the surface of the aircraft part for detection pitting, drips, contaminant attachment, or other anomalies that add or take away from an expected thickness of the applied surface materials. The imaging device 205 may be, for example, an ultrasound device, a radar sensor, and/or a light detection and ranging ("LIDAR") sensor.

The processor 210 analyzes the generated image scan to produce characteristics of the altered surface image and selects a repair process from a plurality of repair processes based on the characteristics of the altered surface image. The decal generating device 215 performs at least part of a decal repair process. The decal generating device 215 may select a size of the decal and print a livery on the decal based on the characteristics of the altered surface image. In various embodiments, the decal generating device 215 may include robotically-controlled components for applying the decal to the aircraft part and applying a clearcoat over the decal.

The inkjet printing device 220 performs at least part of an inkjet repair process. The inkjet printing device 220 with help from surface treatment equipment is configured to remove the altered surface image on the surface down to a basecoat and inkjet print the livery on the surface. If sanding was performed, the a basecoat may be applied before inkjet printing the livery. The livery is associated with an unaltered surface image (e.g., original image) associated with the altered surface image on the surface (e.g., an alteration of the original image has taken place). The inkjet printing device 220 with help from clearcoat applicators is further configured to apply a clearcoat over at least the inkjet printed image. An adhesion promoter may also be applied. In various embodiments, the inkjet printing device 220 may include robotically-controlled components for applying the livery to the aircraft part and/or applying a clearcoat over the livery.

In various embodiments, the inkjet printing device 220 is configured to remove the altered surface image using a solvent wipe or comparable product. The inkjet printing device 220 may remove a clearcoat in response to a clearcoat being present before removing the altered surface image and apply a basecoat, both before applying the inkjet printed image.

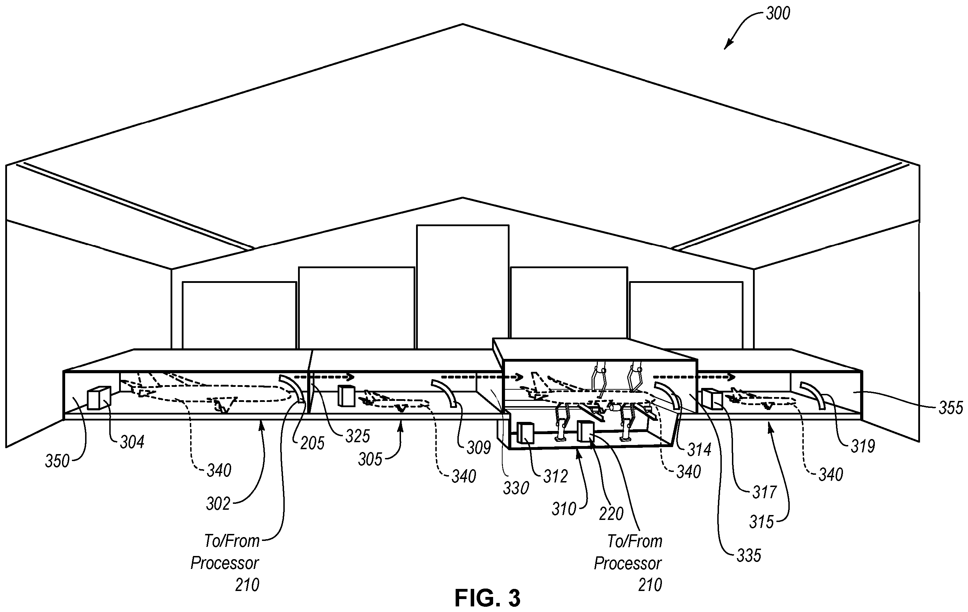

Referring to Figure 3, according to some examples, a hangar bay 300 includes multiple surface treatment bays adjacent each other and each being independently environmentally controlled. As used herein, unless otherwise indicated, "the bays" means a paint removal bay 302, a surface preparation bay 305, a livery application bay 310, and a surface finishing bay 315. The surface treatment bays are used to repair an altered livery on an aircraft part 340. In various embodiments, the surface treatment bays include a paint removal bay 302, a surface preparation bay 305, a livery application bay 310, and a surface finishing bay 315.

In various embodiments, movement of the aircraft part 340 into and between each of the bays may be performed by various motion devices, such as an overhead crane system, aircraft tugs, tracked systems, or the like. The aircraft part 340 or the aircraft parts may be moved between adjacent to bays without being exposed to the environment external to the surface treatment bays but still within the hangar bay 300. Because each of the bays are adjacently located with sealable doors or partitions 325, 330, 335 between the bays, respectively, and a sealable entrance partition 350 to the paint removal bay 302 and a sealable exit partition 355 to the surface finishing bay 315, environmental integrity is maintained around the aircraft part 340 from when repair processing starts at the paint removal bay 302 to when repair processing ends at the surface finishing bay 315. In other words, the aircraft part 340 or multiple parts may be moved between adjacent bays, without being exposed to the environment external to the surface treatment bays, because the environments within each of the bays are controlled and the partitions 325, 330, 335 are sealable.

The paint removal bay 302 and the surface preparation bay 305 are separated by a movable door or partition 325. The partition 325 may be sealable for keeping the environment of the paint removal bay 302 separate from the environment of the surface preparation bay 305. In the paint removal bay 302, any images, decals, surface defects, or the like are removed or fixed by a variety of different processes based on the characteristics determined by the processor 210. The paint removal bay 302 allows for surface treatment to be applied to fleet aircraft as well as in-production aircraft. The paint removal bay 302 may include a heating and ventilation air conditioning ("HVAC") system 304, the imaging device 205, a fire suppression system, and devices for safely handling materials used or produced in the paint removal bay 302.

The partition 325 may be sealable for temporarily keeping the environment of the surface preparation bay 305 separate (e.g., isolated or sealed) from the environment of the paint removal bay 302. After the process performed in the paint removal bay 302 is complete, the partition 325 is opened and the aircraft part 340 is moved, via the motion device, into the surface preparation bay 305. Because the hangar bay 300 may be configured to process multiple aircraft in different bays at the same time, the aircraft part 340 is not moved into the surface preparation bay 305 until any aircraft part 340 in the surface preparation bay 305 is moved to the livery application bay 310.

In the surface preparation bay 305, the surface of the aircraft part 340 is prepared before any one of a primer, a basecoat, or a monocoat is applied. The aircraft part 340 may be a fully assembled aircraft or a portion of a fully assembled aircraft, such as, without limitation, a fuselage with or without a vertical stabilizer, a fuselage with or without wings, unattached wings, unattached vertical stabilizer, or unattached elevators. A maskant or covering is applied to the surface of the aircraft part 340 to expose only those portions of the surface to be prepared based on the determined characteristics of the scanned aircraft part. Maskants are also used to protect the surrounding areas from any cleaning materials (i.e. solvent, paint stripper, etc) from damaging areas outside the repair area. The exposed portions of the surface may also receive livery in the livery application bay 310. Accordingly, the maskant or covering may stay in place for the entire preparation and printing process if the maskant material is used for overspray protection and does not become compromised during the preparation process. Wheel well coverings are an example where the coverings can be left on for the processes performed in the paint removal bay 302, the surface preparation bay 305, the livery application bay 310, and the surface finishing bay 315.

After the maskant is applied onto the surface, particulates are removed from the surface. The surface preparation bay 305 may include an air compressor for applying forced air on the surface to remove particulates from the surface. Additionally or alternatively, the surface preparation bay 305 may include solvents, moist wipes, dry wipes, and/or tack rags that are applied to the surface to remove particulates from the surface. One or more of a primer, basecoat, or monocoat is then applied in accordance with aircraft surface material properties, the characteristics of the livery to be applied to the aircraft surface, based on the determined characteristics and surface protection requirements.

The surface preparation bay 305 may include an HVAC system 307 that maintains humidity, air pressure, air quality, or the like at levels conducive to preparing the surface and applying a basecoat and/or monocoat. The surface preparation bay 305 may include a heating device 309 if drying of the surface or curing of materials applied to the surface is to be performed. The processes performed in the surface preparation bay 305 may be performed manually. However, robotic devices or mechanically assisted devices may also be used. Any fully robotic devices may be controlled automatically by a controller/processor having a user interface for allowing an operator to control processes.

In the surface preparation bay 305, the surface of the aircraft part 340 is masked and cleaned based on the determined characteristics of the scanned aircraft part. Primer is then applied in accordance with aircraft surface material properties, a to-be-applied livery, and surface protection requirements. The surface preparation bay 305 and the livery application bay 310 are separated by a movable door or partition 330. The partition 330 may be sealable for temporarily keeping the environment of the livery application bay 310 separate (e.g., isolated or sealed) from the environment of the surface preparation bay 305. After the process performed in the surface preparation bay 305 is complete, the partition 330 is opened and the aircraft part 340 is moved, via the motion device, into the livery application bay 310. Because the hangar bay 300 may be configured to process multiple aircraft in different bays at the same time, the aircraft part 340 is not moved into the livery application bay 310 until any aircraft part 340 in the livery application bay 310 is moved out of the surface finishing bay 315.

In the livery application bay 310, a livery is applied to at least a portion of the surface of the aircraft part 340 based on the determined characteristics. The livery application bay 310 includes environmental features that adhere to various predefined requirements that are associated with efficient, effective livery application. For example, the livery application bay 310 may include an HVAC system 312 that maintains humidity, air pressure, air quality, or the like at predefined levels. The livery application bay 310 includes a livery application device, such as, without limitation, an automated robotic inkjet system. The livery application bay 310 may include a heating device 314 if drying of the surface or curing of materials applied to the surface is to be performed. The processes performed in the livery application bay 310 may be performed manually using manual paint application techniques. In certain examples, the hangar bay 300 is configured to process multiple aircraft in different bays at the same time. In such examples, the aircraft part 340 is not moved into the livery application bay 310 until any aircraft part 340 in the in the livery application bay 310 is moved out of the livery application bay 310 and into the surface finishing bay 315.

In the surface finishing bay 315, surface finishing steps are performed, such as, without limitation, touch up and application of a clearcoat based on the determined characteristics. The surface finishing bay 315 may include an HVAC system 317 that maintains humidity, air pressure, air quality, or the like at levels conducive to preparing the surface and applying the clearcoat. The surface finishing bay 315 may include a heating device 319 if drying of the surface or curing of materials applied to the surface is to be performed. The processes performed in the surface finishing bay 315 may be performed manually, however, robotic devices or mechanically assisted devices may also be used. Any fully robotic devices may be controlled automatically by a controller/processor having a user interface for allowing an operator to control processes. The partition 335 may be sealable for temporarily keeping the environment of the surface finishing bay 315 separate (e.g., isolated or sealed) from the environment of the livery application bay 310.

The livery application bay 310 and the surface finishing bay 315 are separated by a movable door or partition 335. The partition 335 may be sealable for keeping the environment of the livery application bay 310 separate from the environment of the surface finishing bay 315. Once the process performed in the livery application bay 310 is complete, the partition 335 is opened and the aircraft part 340 is moved into the surface finishing bay 315 provided any aircraft or aircraft part previously within the surface finishing bay 315 has been moved out.

In various embodiments, movement of the aircraft part 340 may be performed by various devices, such as an overhead crane system, aircraft tugs, tracked systems, or the like. The aircraft part 340 or the aircraft parts may be moved between adjacent to bays without being exposed to the environment external to the surface treatment bays.

The paint removal bay 302, the livery application bay 310, and/or the surface finishing bay 315 may be sized according to the aircraft or aircraft part 340, such as a fuselage or wing. In certain examples, the surface preparation bay 305, the livery application bay 310, and the surface finishing bay 315 are limited in size to improve the cost and reduce the complexity of controlling heat/cool, humidity, and air quality. Also, by performing the processes for the aircraft part 340 within multiple adjoining bays, safety is improved because there is less of a need for wing stands and stacker/lifts, thereby reducing collision avoidance incidents.

In various embodiments, the livery application bay 310 may include a livery-making system (e.g., the inkjet printing device 220) that includes an automated robotically controlled actuator and nozzles. The inkjet printing device 220 uses a control path and real-time sensor information to control a robotic printing system for performing livery printing of aircraft parts based on characteristics received form the processor 210.

In various embodiments, the inkjet printing device 220 may include a training and/or control system that include a processor, an input/output ("I/O") device(s), and a memory device. The processor is in data communication with the I/O device(s) and the memory device. The memory device is a computer-readable medium that includes program code instructions (i.e., software) that when executed by the processor performs a number of predefined tasks. The processor receives a three-dimensional (3D) digital model of the aircraft part to be painted. The 3D model may be stored in the memory device or the 3D model may be received from another 3D model generating system. The memory device includes a non-transient computer-readable medium, such as randomaccess memory (RAM), read-only memory (ROM), or other memory structure.

In various embodiments, the inkjet printing device 220 receives simulated sensor data or actual sensor data received from sensors. The simulated or actual sensor data includes environmental information, such as humidity, atmospheric pressure, or other environmental data. Additionally, or alternatively, the simulated or actual sensor data includes simulated or actual measurement information.

In various embodiments, the inkjet printing device 220 may include a robotic component, a printhead assembly, and/or a memory device. The printhead assembly includes a plurality of printheads, a plurality of actuators, and a plurality of sensors. The printhead assembly is robotically controlled. As used herein, a robotic system can include one or more robotic controllers, actuator arms, motors, wheels, pullies, end effectors, and the like, which in some examples are well known in the art. The robotic controller of the robotic system is programmable to control actuation of the actuatable components of the robotic system.

As discussed above, the robotic controller is programmed to transmit operational commands to the printhead assembly and other actuators/motors for controlling movement of the other actuators/motors and the actuators of the printhead assembly.

In various embodiments, the sensors are configured to scan and collect data during operation of the printing system, including printing operations performed by the robotic controller, the actuators/motors, and the printhead assembly. In some examples, the sensors include vision data sensors, such as a digital camera or other such vision sensors, distance data sensors, such as a time-of-flight camera, a LIDAR sensor or other such distance measurement sensors, topography sensors, such as an interferometer, a profilometer or other such surface topography sensors, capacitive transducers, or ultrasound transducers.

In one non-limiting example, the sensors include surface scanning lasers configured to scan and collect surface topography data of the contoured surface of the aircraft part and the surrounding areas. The surface topography data may include surface roughness data, surface imaging data, location/positioning data, height sense data, angular orientation data, and any other such surface data.

The methods and processes described herein with regard to printing may also be used with other surface treatment equipment, such as, without limitation, cleaning, abrading, priming, protecting, repairing, or other such surface treatment applied along the contoured surface of the object to be treated.

The following portion of this paragraph delineates an example of the subject matter, disclosed herein. According to this example, the inkjet printing device further removes or equipment (e.g., solvent wipes) associated with the inkjet printing device is used to remove the altered surface image on the surface down to a basecoat between the surface and the altered surface image, inkjet prints the first image on the surface based on the unaltered version of the altered surface image, applies an adhesion promoter, and applies a clearcoat over the first image and the adhesion promoter.

The following portion of this paragraph delineates an example of the subject matter, disclosed herein. According to this example, an apparatus includes an imaging device and a processor. The imaging device generates an image scan of an altered surface image on a surface of an aircraft part. The processor analyzes the image scan to determine characteristics of the altered surface image and selects a repair process from a plurality of repair processes based on the characteristics of the altered surface image. The plurality of repair processes includes a paint repair process, a decal repair process, and an inkjet repair process.

The following portion of this paragraph delineates an example of the subject matter, disclosed herein. According to this example encompasses the previously described example, above, the processor, in response to selecting the decal repair process, further selects a size of a decal based on the characteristics of the altered surface image and determines an image to print on the decal based on an unaltered version of the altered surface image.

The following portion of this paragraph delineates an example of the subject matter, disclosed herein. According to this example, which encompasses any one of of the previously two examples above, the processor, in response to selecting the paint repair process or the inkjet repair process, further determines the image to paint or inkjet print on the surface based on an unaltered version of the altered surface image.

The following portion of this paragraph delineates an example of the subject matter, disclosed herein. According to this example which encompasses any one of previous three examples, above, the processor further provides altered surface image removal instructions based on the characteristics of the altered surface image.

The following portion of this paragraph delineates an example of of the subject matter, disclosed herein. According to this example, which encompasses any one of previous four examples, above, the processor further transmits repair instructions to a paint repair facility, a decal production facility, or an inkjet application facility based on the repair process selected.

In the above description, certain terms may be used such as "up," "down," "upper," "lower," "horizontal," "vertical," "left," "right," "over," "under" and the like. These terms are used, where applicable, to provide some clarity of description when dealing with relative relationships. But these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two."

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

As used herein, the phrase "at least one of", when used with a list of items means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lowernumbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The schematic flow chart diagrams included herein are generally set forth as logical flow chart diagrams. As such, the depicted order and labeled steps are indicative of one example of the presented method. Other steps and methods may be conceived that are equivalent in function, logic, or effect to one or more steps, or portion: thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

Those skilled in the art will recognize that at least a portion of the controllers, devices, units, and/or processes described herein can be integrated into a data processing system. Those having skill in the art will recognize that a data processing system generally includes one or more of a system unit housing, a video display device, memory such as volatile or non-volatile memory, processors such as microprocessors or digital signal processors, computational entities such as operating systems, drivers, graphical user interfaces, and applications programs, one or more interaction devices (e.g., a touch pad, a touch screen, an antenna, etc.), and/or control systems including feedback loops and control motors (e.g., feedback for sensing position and/or velocity; control motors for moving and/or adjusting components and/or quantities). A data processing system may be implemented utilizing suitable commercially available components, such as those typically found in data computing/communication and/or network computing/communication systems.

The term controller/processor, as used in the foregoing/following disclosure, may refer to a collection of one or more components that are arranged in a particular manner, or a collection of one or more general-purpose components that may be configured to operate in a particular manner at one or more particular points in time, and/or also configured to operate in one or more further manners at one or more further times. For example, the same hardware, or same portions of hardware, may be configured/reconfigured in sequential/parallel time(s) as a first type of controller (e.g., at a first time), as a second type of controller (e.g., at a second time, which may in some instances coincide with, overlap, or follow a first time), and/or as a third type of controller (e.g., at a third time which may, in some instances, coincide with, overlap, or follow a first time and/or a second time), etc. Reconfigurable and/or controllable components (e.g., general purpose processors, digital signal processors, field programmable gate arrays, etc.) are capable of being configured as a first controller that has a first purpose, then a second controller that has a second purpose and then, a third controller that has a third purpose, and so on. The transition of a reconfigurable and/or controllable component may occur in as little as a few nanoseconds, or may occur over a period of minutes, hours, or days.

For example, a central processing unit/processor or the like of a controller may, at various times, operate as a component/module for displaying graphics on a screen, a component/module for writing data to a storage medium, a component/module for receiving user input, and a component/module for multiplying two large prime numbers, by configuring its logical gates in accordance with its instructions. Such reconfiguration may be invisible to the naked eye, and in some embodiments may include activation, deactivation, and/or re-routing of various portions of the component, e.g., switches, logic gates, inputs, and/or outputs. Thus, in the examples found in the foregoing/following disclosure, if an example includes or recites multiple components/modules, the example includes the possibility that the same hardware may implement more than one of the recited components/modules, either contemporaneously or at discrete times or timings. The implementation of multiple components/modules, whether using more components/modules, fewer components/modules, or the same number of components/modules as the number of components/modules, is merely an implementation choice and does not generally affect the operation of the components/modules themselves. Accordingly, it should be understood that any recitation of multiple discrete components/modules in this disclosure includes implementations of those components/modules as any number of underlying components/modules, including, but not limited to, a single component/module that reconfigures itself over time to carry out the functions of multiple components/modules, and/or multiple components/modules that similarly reconfigure, and/or special purpose reconfigurable components/modules.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software (e.g., a high-level computer program serving as a hardware specification), firmware, or virtually any combination thereof, limited to patentable subject matter under 35 U.S.C. 101. In an embodiment, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the embodiments disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, limited to patentable subject matter under 35 U.S.C. 101, and that designing the circuitry and/or writing the code for the software (e.g., a high-level computer program serving as a hardware specification) and or firmware would be well within the skill of one of skill in the art in light of this disclosure. In addition, those skilled in the art will appreciate that the mechanisms of the subject matter described herein are capable of being distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a Compact Disc (CD), a Digital Video Disk (DVD), a digital tape, a computer memory, etc.; and a transmission type medium such as a digital and/or an analog communication medium (e.g., a fiber optic cable, a waveguide, a wired communications link, a wireless communication link (e.g., transmitter, receiver, transmission logic, reception logic, etc.), etc.).

With respect to the appended claims, those skilled in the art will appreciate that recited operations therein may generally be performed in any order. Also, although various operational flows are presented in a sequence(s), it should be understood that the various operations may be performed in other orders than those which are illustrated or may be performed concurrently. Examples of such alternate orderings may include overlapping, interleaved, interrupted, reordered, incremental, preparatory, supplemental, simultaneous, reverse, or other variant orderings, unless context dictates otherwise. Furthermore, terms like "responsive to," "related to," or other past-tense adjectives are generally not intended to exclude such variants, unless context dictates otherwise.

While the disclosed subject matter has been described in terms of illustrative embodiments, it will be understood by those skilled in the art that various modifications can be made thereto without departing from the scope of the claimed subject matter as set forth in the claims.

## Claims

1. A computer-implemented method comprising:
receiving an aircraft part (340) having an altered surface image in need of repair on a surface of the aircraft part (340);
imaging, using an imaging device (205), to generate an image scan of the altered surface image;
automatically analyzing the image scan using a processor (210) to determine characteristics of the altered surface image;
selecting a repair process from a plurality of repair processes, based on characteristics of the altered surface image wherein selecting the repair process comprises a processor (210) to automatically select the repair process based on the characteristics of the altered surface image determined from analyzing the generated image scan; and
transmitting repair instructions to a paint repair facility, a decal production facility, or an inkjet application facility based on the repair process selected;
in response to selecting a paint repair process (122), applying paint to the surface over the altered surface image;
in response to selecting a decal repair process (124), printing a first image on a decal based on the characteristics of the altered surface image and a second image associated with the altered surface image and applying the decal to the surface at least partially over the altered surface image; and
in response to selecting an inkjet repair process (126), performing the inkjet repair process (126) to at least a portion of the surface based on the characteristics of the altered surface image by forming a printed surface using ink as the print medium.

2. The method of claim 1, wherein further in response to selecting the inkjet repair process (126):
removing the altered surface image on the surface down to a basecoat between the surface and the altered surface image;
inkjet printing a third image on the surface to create an inkjet printed image; and
applying a clearcoat over the third image.

3. The method of claim 2, wherein removing the altered surface image comprises using a solvent wipe.

4. The method of claim 2, wherein further in response to selecting the inkjet repair process (126), before removing the altered surface image, removing a clearcoat over the altered surface image, and after removing the altered surface image, applying a basecoat at a location where the altered surface image was removed.

5. The method of any preceding claim, wherein the imaging device (205) is able to sense depth values of the surface and comprises an ultrasound device, a radar sensor and/or a light detection and ranging sensor.

6. The method of any preceding claim, wherein printing the first image on the decal comprises:
selecting a size of the decal based on the characteristics of the altered surface image determined from analyzing the generated image scan; and
inkjet printing the first image on the decal based on the characteristics of the altered surface image determined from analyzing the generated image scan.

7. The method of any preceding claim, wherein performing the inkjet repair process is based on the characteristics of the altered surface image determined from analyzing the generated image scan.

8. The method of any preceding claim, wherein the decal repair process (124) and/or the inkjet repair process (126) are carried out using robotically-controlled components.

9. A system (200) comprising:
an imaging device (205) configured to generate an image scan of an altered surface image on a surface of an aircraft part; and
a processor (210) configured to:
analyze the image scan to determine characteristics of the altered surface image; and
select a repair process from a plurality of repair processes based on the characteristics of the altered surface image; wherein the system is further configured to:
in response to selection of a paint repair process (122), apply paint to the surface over the altered surface image;
in response to selection of a decal repair process (124), print a first image on a decal based on the characteristics of the altered surface image and a second image associated with the altered surface image and apply the decal to the surface at least partially over the altered surface image; and
in response to selection of an inkjet repair process (126), perform the inkjet repair process (126) to at least a portion of the surface based on the characteristics of the altered surface image by forming a printed surface using ink as the print medium,
wherein the processor (210) is further configured to transmit repair instructions to a paint repair facility processor (330), a decal production facility, or an inkjet application facility (310) based on the repair process selected.

10. The system of claim 9, wherein the decal generating device (215) is further configured to:
select a size of the decal based on characteristics of the altered surface image; and
inkjet print using ink as the print medium a first image on the decal based on an unaltered version of the altered surface image.

11. The system of claim 9 or 10, further comprising an inkjet printing device (220) configured to print a first image on the surface based on an unaltered version of the altered surface image.

12. The system of claim 11, wherein the inkjet printing device (220) is further configured to:
remove the altered surface image on the surface down to a basecoat between the surface and the altered surface image;
inkjet print the first image on the surface based on the unaltered version of the altered surface image; and
apply a clearcoat over the first image.

13. The system of claim 12, wherein the inkjet printing device (220) is further configured to remove the altered surface image using a solvent wipe.

14. The system of claim 12, wherein the inkjet printing device (220) is further configured to:
remove a clearcoat before removing the altered surface image; and
apply a basecoat after removing the altered surface image.

15. The system of any of claims 9-14, wherein the imaging device (205) is able to sense depth values of the surface and comprises an ultrasound device, a radar sensor and/or a light detection and ranging sensor.

## Patentansprüche

1. Computerimplementiertes Verfahren aufweisend:
Empfangen eines Flugzeugteils (340), das ein reparaturbedürftiges verändertes Oberflächenbild auf einer Oberfläche des Flugzeugteils (340) hat;
Abbilden unter Verwendung einer Abbildungsvorrichtung (205), um eine Bildaufnahme des veränderten Oberflächenbilds zu erzeugen;
automatisches Analysieren der Bildaufnahme unter Verwendung eines Prozessors (210), um Eigenschaften des veränderten Oberflächenbilds zu bestimmen;
Auswählen eines Reparaturprozesses aus einer Vielzahl von Reparaturprozessen auf Basis von Eigenschaften des veränderten Oberflächenbilds, wobei Auswählen des Reparaturprozesses einen Prozessor (210) einbezieht, um den Reparaturprozess auf Basis der Eigenschaften des veränderten Oberflächenbilds, die aus Analysieren der erzeugten Bildaufnahme bestimmt worden sind, automatisch auszuwählen; und
Senden von Reparaturbefehlen zu einer Lackreparatureinrichtung, einer Aufkleber-Herstellungseinrichtung oder einer Tintenstrahlauftragungseinrichtung auf Basis des ausgewählten Reparaturprozesses;
als Antwort auf Auswählen eines Lackreparaturprozesses (122), Auftragen eines Lacks auf die Oberfläche über dem veränderten Oberflächenbild;
als Antwort auf Auswählen eines Aufkleber-Reparaturprozesses (124), Drucken eines ersten Bilds auf einen Aufkleber auf Basis der Eigenschaften des veränderten Oberflächenbilds und eines mit dem veränderten Oberflächenbild assoziierten zweiten Bilds und Aufbringen des Aufklebers auf die Oberfläche zumindest teilweise über dem veränderten Oberflächenbild; und
als Antwort auf Auswählen eines Tintenstrahl-Reparaturprozesses (126), Durchführen des Tintenstrahl-Reparaturprozesses (126) an mindestens einem Teil der Oberfläche auf Basis der Eigenschaften des veränderten Oberflächenbilds durch Erzeugen einer bedruckten Oberfläche unter Verwendung von Tinte als das Druckermaterial.

2. Verfahren nach Anspruch 1, ferner aufweisend als Antwort auf Auswählen des Tintenstrahl-Reparaturprozesses (126):
Entfernen des veränderten Oberflächenbilds auf der Oberfläche bis hinunter zu einem Grundlack zwischen der Oberfläche und dem veränderten Oberflächenbild;
Tintenstrahldrucken eines dritten Bilds auf die Oberfläche, um ein mit Tintenstrahl gedrucktes Bild zu erzeugen; und
Auftragen eines Klarlacks über das dritte Bild.

3. Verfahren nach Anspruch 2, wobei Entfernen des veränderten Oberflächenbilds Verwenden eines lösungsmittelhaltigen Wischtuchs aufweist.

4. Verfahren nach Anspruch 2, ferner aufweisend als Antwort auf Auswählen des Tintenstrahl-Reparaturprozesses (126):
vor Entfernen des veränderten Oberflächenbilds, Entfernen eines Klarlacks über dem veränderten Oberflächenbild, und
nach Entfernen des veränderten Oberflächenbilds, Auftragen eines Grundlacks an einem Ort, an dem das veränderte Oberflächenbild entfernt worden ist.

5. Verfahren nach einem der vorstehenden Ansprüche, wobei die Abbildungsvorrichtung (205) geeignet ist, Tiefenwerte der Oberfläche zu erfassen, und eine Ultraschallvorrichtung, einen Radarsensor und/oder einen Lidarsensor aufweist.

6. Verfahren nach einem der vorstehenden Ansprüche, wobei Drucken des ersten Bilds auf den Aufkleber aufweist:
Auswählen einer Größe des Aufklebers auf Basis der Eigenschaften des veränderten Oberflächenbilds, die aus Analysieren der erzeugten Bildaufnahme bestimmt worden sind; und
Tintenstrahldrucken des ersten Bilds auf den Aufkleber auf Basis der Eigenschaften des veränderten Oberflächenbilds, die aus Analysieren der erzeugten Bildaufnahme bestimmt worden sind.

7. Verfahren nach einem der vorstehenden Ansprüche, wobei Durchführen des Tintenstrahl-Reparaturprozesses auf den Eigenschaften des veränderten Oberflächenbilds, die aus Analysieren der erzeugten Bildaufnahme bestimmt worden sind, basiert.

8. Verfahren nach einem der vorstehenden Ansprüche, wobei der Aufkleber-Reparaturprozess (124) und/oder der Tintenstrahl-Reparaturprozess (126) unter Verwendung von roboter-gesteuerten Komponenten ausgeführt werden.

9. System (200) aufweisend:
eine Abbildungsvorrichtung (205), die konfiguriert ist, eine Bildaufnahme eines veränderten Oberflächenbilds, das auf einer Oberfläche eines Flugzeugteils ist, zu erzeugen; und
einen Prozessor (210), der konfiguriert ist, um:
die Bildaufnahme zu analysieren, um Eigenschaften des veränderten Oberflächenbilds zu bestimmen; und
einen Reparaturprozess aus einer Vielzahl von Reparaturprozessen auf Basis der Eigenschaften des veränderten Oberflächenbilds auszuwählen;
wobei das System ferner konfiguriert ist, um:
als Antwort auf Auswählen eines Lack-Reparaturprozesses (122), einen Lack auf die Oberfläche über dem veränderten Oberflächenbild aufzutragen;
als Antwort auf Auswählen eines Aufkleber-Reparaturprozesses (124), ein erstes Bild auf einen Aufkleber zu drucken und zwar auf Basis der Eigenschaften des veränderten Oberflächenbilds und eines mit dem veränderten Oberflächenbild assoziierten zweiten Bilds und den Aufkleber auf die Oberfläche zumindest teilweise über dem veränderten Oberflächenbild aufzubringen; und
als Antwort auf Auswählen eines Tintenstrahl-Reparaturprozesses (126), den Tintenstrahl-Reparaturprozess (126) an mindestens einem Teil der Oberfläche durchzuführen und zwar auf Basis der Eigenschaften des veränderten Oberflächenbilds und durch Erzeugen einer bedruckten Oberfläche unter Verwendung von Tinte als das Druckermaterial,
wobei der Prozessor (210) ferner konfiguriert ist, auf Basis des ausgewählten Reparaturprozesses Reparaturbefehle zu einem Lackreparatureinrichtung-Prozessor (330), einer Aufkleber-Herstellungseinrichtung oder einer Tintenstrahlauftragungseinrichtung zu senden.

10. System nach Anspruch 9, wobei die Aufkleber-Erzeugungsvorrichtung (215) ferner konfiguriert ist, um:
eine Größe des Aufklebers auf Basis der Eigenschaften des veränderten Oberflächenbilds auszuwählen; und
ein erstes Bild auf den Aufkleber zu drucken, und zwar auf Basis einer nichtveränderten Version des veränderten Oberflächenbilds und unter Verwendung von Tinte als das Druckermaterial.

11. System nach Anspruch 9 oder 10, ferner aufweisend eine Tintenstrahldruckvorrichtung (220), die konfiguriert ist, auf Basis einer nichtveränderten Version des veränderten Oberflächenbilds ein erstes Bild auf die Oberfläche zu drucken.

12. System nach Anspruch 11, wobei die Tintenstrahldruckvorrichtung (220) ferner konfiguriert ist, um:
das veränderte Oberflächenbild auf der Oberfläche bis hinunter zu einem Grundlack zwischen der Oberfläche und dem veränderten Oberflächenbild zu entfernen;
das erste Bild auf Basis der nichtveränderten Version des veränderten Oberflächenbilds auf die Oberfläche mittels Tintenstrahldruck zu drucken; und
einen Klarlack über das erste Bild aufzutragen.

13. System nach Anspruch 12, wobei die Tintenstrahldruckvorrichtung (220) ferner konfiguriert ist, das veränderte Oberflächenbild unter Verwendung eines lösungsmittelhaltigen Wischtuchs zu entfernen.

14. System nach Anspruch 12, wobei die Tintenstrahldruckvorrichtung (220) ferner konfiguriert ist, um:
vor Entfernen des veränderten Oberflächenbilds einen Klarlack zu entfernen; und
nach Entfernen des veränderten Oberflächenbilds einen Grundlack aufzutragen.

15. System nach einem der Ansprüche 9 bis 14, wobei die Abbildungsvorrichtung (205) dazu geeignet ist, Tiefenwerte der Oberfläche zu erfassen, und eine Ultraschallvorrichtung, einen Radarsensor und/oder einen Lidarsensor aufweist.

## Revendications

1. Procédé mis en œuvre par ordinateur, comprenant :
la réception d'une pièce d'aéronef (340) présentant une image de surface modifiée nécessitant une réparation sur une surface de la pièce d'aéronef (340) ;
l'imagerie, à l'aide d'un dispositif d'imagerie (205), pour générer un balayage d'image de l'image de surface modifiée ;
l'analyse automatique du balayage d'image à l'aide d'un processeur (210) pour déterminer des caractéristiques de l'image de surface modifiée ;
la sélection d'un processus de réparation parmi une pluralité de processus de réparation, sur la base de caractéristiques de l'image de surface modifiée, dans lequel la sélection du processus de réparation comprend la sélection automatique, par un processeur (210), du processus de réparation sur la base des caractéristiques de l'image de surface modifiée déterminées à partir de l'analyse du balayage d'image généré ; et
la transmission d'instructions de réparation à une installation de réparation par peinture, à une installation de production d'autocollants ou à une installation d'application de jet d'encre sur la base du processus de réparation sélectionné ;
en réponse à la sélection d'un processus de réparation par peinture (122), l'application de peinture sur la surface au-dessus de l'image de surface modifiée ;
en réponse à la sélection d'un processus de réparation par autocollant (124), l'impression d'une première image sur un autocollant sur la base des caractéristiques de l'image de surface modifiée et d'une deuxième image associée à l'image de surface modifiée et l'application de l'autocollant sur la surface au moins partiellement sur l'image de surface modifiée ; et
en réponse à la sélection d'un processus de réparation par jet d'encre (126), la réalisation du processus de réparation par jet d'encre (126) sur au moins une partie de la surface sur la base des caractéristiques de l'image de surface modifiée en formant une surface imprimée à l'aide d'encre comme support d'impression.

2. Procédé selon la revendication 1, comprenant en outre, en réponse à la sélection du processus de réparation par jet d'encre (126) :
le retrait de l'image de surface modifiée sur la surface jusqu'à une couche de base entre la surface et l'image de surface modifiée ;
l'impression par jet d'encre d'une troisième image sur la surface pour créer une image imprimée par jet d'encre ; et
l'application d'une couche transparente sur la troisième image.

3. Procédé selon la revendication 2, dans lequel le retrait de l'image de surface modifiée comprend l'utilisation d'une lingette de solvant.

4. Procédé selon la revendication 2, comprenant en outre, en réponse à la sélection du processus de réparation par jet d'encre (126), avant le retrait de l'image de surface modifiée, le retrait d'une couche transparente sur l'image de surface modifiée et, après le retrait de l'image de surface modifiée, l'application d'une couche de base à un endroit où l'image de surface modifiée a été retirée.

5. Procédé selon une quelconque revendication précédente, dans lequel le dispositif d'imagerie (205) est capable de détecter des valeurs de profondeur de la surface et comprend un dispositif à ultrasons, un capteur radar et/ou un capteur de détection de lumière et de télémétrie.

6. Procédé selon une quelconque revendication précédente, dans lequel l'impression de la première image sur l'autocollant comprend :
la sélection d'une taille de l'autocollant sur la base des caractéristiques de l'image de surface modifiée déterminées à partir de l'analyse du balayage d'image généré ; et
l'impression par jet d'encre de la première image sur l'autocollant sur la base des caractéristiques de l'image de surface modifiée déterminées à partir de l'analyse du balayage d'image généré.

7. Procédé selon une quelconque revendication précédente, dans lequel la réalisation du processus de réparation par jet d'encre est basée sur les caractéristiques de l'image de surface modifiée déterminées à partir de l'analyse du balayage d'image généré.

8. Procédé selon une quelconque revendication précédente, dans lequel le processus de réparation par autocollant (124) et/ou le processus de réparation par jet d'encre (126) sont réalisés à l'aide de composants commandés par robot.

9. Système (200) comprenant :
un dispositif d'imagerie (205) configuré pour générer un balayage d'image d'une image de surface modifiée sur une surface d'une pièce d'aéronef ; et
un processeur (210) configuré pour :
analyser le balayage d'image pour déterminer des caractéristiques de l'image de surface modifiée ; et
sélectionner un processus de réparation parmi une pluralité de processus de réparation sur la base des caractéristiques de l'image de surface modifiée ; dans lequel le système est en outre configuré pour :
en réponse à la sélection d'un processus de réparation par peinture (122), appliquer de la peinture sur la surface au-dessus de l'image de surface modifiée ;
en réponse à la sélection d'un processus de réparation par autocollant (124), imprimer une première image sur un autocollant sur la base des caractéristiques de l'image de surface modifiée et d'une deuxième image associée à l'image de surface modifiée et appliquer l'autocollant sur la surface au moins partiellement sur l'image de surface modifiée ; et
en réponse à la sélection d'un processus de réparation par jet d'encre (126), réaliser le processus de réparation par jet d'encre (126) sur au moins une partie de la surface sur la base des caractéristiques de l'image de surface modifiée en formant une surface imprimée à l'aide d'encre comme support d'impression, dans lequel le processeur (210) est en outre configuré pour transmettre des instructions de réparation à un processeur d'installation de réparation par peinture (330), une installation de production d'autocollants ou une installation d'application de jet d'encre (310) sur la base du processus de réparation sélectionné.

10. Système selon la revendication 9, dans lequel le dispositif de génération d'autocollant (215) est en outre configuré pour :
sélectionner une taille de l'autocollant sur la base de caractéristiques de l'image de surface modifiée ; et
réaliser une impression par jet d'encre à l'aide d'encre comme support d'impression d'une première image sur l'autocollant sur la base d'une version inchangée de l'image de surface modifiée.

11. Système selon la revendication 9 ou 10, comprenant en outre un dispositif d'impression par jet d'encre (220) configuré pour imprimer une première image sur la surface sur la base d'une version inchangée de l'image de surface modifiée.

12. Système selon la revendication 11, dans lequel le dispositif d'impression par jet d'encre (220) est en outre configuré pour :
retirer l'image de surface modifiée sur la surface jusqu'à une couche de base entre la surface et l'image de surface modifiée ;
réaliser l'impression par j et d'encre de la première image sur la surface sur la base de la version inchangée de l'image de surface modifiée ; et
appliquer un couche transparente sur la première image.

13. Système selon la revendication 12, dans lequel le dispositif d'impression par jet d'encre (220) est en outre configuré pour retirer l'image de surface modifiée à l'aide d'une lingette de solvant.

14. Système selon la revendication 12, dans lequel le dispositif d'impression par jet d'encre (220) est en outre configuré pour :
retirer une couche transparente avant de retirer l'image de surface modifiée ; et
appliquer une couche de base après avoir retiré l'image de surface modifiée.

15. Système selon l'une quelconque des revendications 9 à 14, dans lequel le dispositif d'imagerie (205) est capable de détecter des valeurs de profondeur de la surface et comprend un dispositif à ultrasons, un capteur radar et/ou un capteur de détection de lumière et de télémétrie.
